# EUROPÄISCHE PATENTSCHRIFT

(11) **EP 2 649 506 B1**
(45) Veröffentlichungstag und Bekanntmachung des Hinweises auf die Patenterteilung: **26.06.2019**
(21) Anmeldenummer: 11805440.2
(22) Anmeldetag: 08.12.2011
(51) Int. Cl.: G06F 3/0354, G06F 3/044, G06F 3/041

(54) **VERFAHREN ZUR BESTIMMUNG EINER POSITION EINER BERÜHRUNG AUF EINEM KAPAZITIVEN SENSORFELD**
METHOD FOR DETERMINING A TOUCH POSITION ON A CAPACITANCE SENSOR PANEL
METHODE DE DETERMINATION D'UNE POSITION DE CONTACT SUR UN PANNEAU DE CAPTEURS CAPACITIFS

(30) Priorität: 08.12.2010 DE 102010053684
(43) Veröffentlichungstag der Anmeldung: 16.10.2013
(73) Patentinhaber: TRW Automotive Electronics & Components GmbH, 78315 Radolfzell (DE)
(72) Erfinder: BACKES, Ulrich, 78315 Radolfzell (DE); REISE, Wulf, 78462 Konstanz (DE)
(74) Vertreter: Prinz & Partner mbB
(86) Internationale Anmeldenummer: PCT/EP2011/072160
(87) Internationale Veröffentlichungsnummer: WO 2012/076637

(56) Entgegenhaltungen:
- EP-A1- 1 741 476
- EP-A2- 0 483 709
- EP-A2- 0 609 021
- US-A- 5 479 528

## Beschreibung

Die Erfindung wird im Anspruch 1 definiert. Diese Offenbarung beschreibt ein Verfahren zur Bestimmung einer Position einer Berührung auf einem kapazitiven Sensorfeld mit einem Raster aus mehreren diskreten Elektroden.

In der Regel wird bei zweidimensionalen Touchpads die Erkennungsgenauigkeit dadurch verbessert, indem das Elektrodenraster sehr eng ausgebildet wird. Insbesondere wird der Abstand der Elektroden deutlich kleiner gewählt als ein durchschnittlicher Berührdurchmesser einer Fingerspitze. Dies führt jedoch zu einer hohen Anzahl von Elektroden, mit der ein hoher Aufwand bei der Signalauswertung verbunden ist.

In der gattungsgemäßen EP 0 609 021 A2 ist ein Sensorfeld gezeigt, bei dem eine Gewichtung der Position der Elektroden mit den gemessenen Kapazitäten vorgenommen wird. Die x- und y-Koordinaten werden mittels Formeln berechnet.

Die EP 1 741 476 A1 betrifft eine Reskalierung von auf einem Touchpad maximal möglicher x- und y-Eingabewerte in Abhängigkeit von der Berührfläche, in Form der Größe der Fingerkuppe, um unabhängig von der Größe der Berührfläche die gleiche Bedienbarkeit des Touchpads bereitzustellen. Diese Werte werden in mehreren Schritten berechnet.

Aufgabe der Erfindung ist es, ein Verfahren vorzustellen, mit dem auch bei einem Elektrodenraster mit weiter als herkömmlich auseinanderliegenden Elektroden ein Berührpunkt mit hoher Genauigkeit bestimmt werden kann.

Diese Offenbarung beschreibt ein Verfahren, wobei
a) berührte Elektroden bestimmt werden, indem für jede der Elektroden ein Kapazitätswert gemessen wird und für jede der Elektroden für den gemessenen Kapazitätswert überprüft wird, ob dieser Wert über einem vorher festgelegten Schwellwert liegt,
b) eine grobe Berührposition berechnet wird, indem die Elektrodenposition mit dem gemessenen Kapazitätswert gewichtet wird,
c) aus den gemessenen Kapazitätswerten ein Berührdurchmesser errechnet wird und
d) eine endgültige Berührposition errechnet wird aus der groben Berührposition und dem errechneten Berührdurchmesser unter Verwendung einer Wertetabelle, in der für mögliche grobe Berührpositionen und vorgegebene Berührdurchmesser Korrekturwerte abgelegt sind, die empirisch bestimmt wurden.

Auf diese Weise lässt sich auch für ein relativ grobes Elektrodenraster die Berührposition mit einer Abweichung von unter 1 mm ermitteln.

Die Korrekturwerte sind vorzugsweise für diskrete Relativpositionen mit einer höheren Auflösung als das Elektrodenraster abgelegt. Die Auflösung kann das 10 bis 200fache von der des Elektrodenrasters betragen. Insbesondere ein Faktor von 100 hat sich als vorteilhaft erwiesen. Unter der Auflösung wird hierbei die Teilung eines Feinrasters entlang der vorgegebenen Richtungen verstanden, das durch die Korrekturwerte entsteht.

Vorzugsweise sind die Elektroden, für die der gemessene Kapazitätswert über dem Schwellwert liegt, zu wenigstens einer Gruppe von benachbarten Elektroden, insbesondere von vier Elektroden, deren Mittelpunkte die Ecken eines Rechtecks bilden, zusammengefasst, und für jede Gruppe von Elektroden die grobe Berührposition durch Division der Summe der Produkte der Elektrodenpositionen der Gruppe mit den gemessenen Kapazitätswerten durch die Summe aller gemessenen Kapazitätswerte der Gruppe bestimmt wird. Besonders einfach lässt sich das Verfahren anwenden, wenn die vier Elektroden in einem Rechteck angeordnet sind. Auch eine andere Anzahl von Elektroden und andere Anordnungen von Elektroden in einer Gruppe sind natürlich verwendbar. Das Verfahren muss lediglich an die Geometrie angepasst werden.

Für die Korrekturwerte können Symmetrien in zwei zueinander orthogonalen Richtungen bezüglich eines Mittelpunkts der Gruppe von Elektroden verwendet werden.

Es hat sich herausgestellt, dass es möglich ist, eine Darstellung für die Korrekturwerte zu finden, in der diese, beispielsweise bezüglich eines Mittelpunkts der Gruppe von Elektroden, mehrere Symmetrien aufweisen. Diese Symmetrien können ausgenutzt werden, um die Anzahl der Korrekturwerte zu reduzieren, indem Korrekturwerte nur für wenige, vorbestimmte Linien erfasst und gespeichert werden müssen. Dies reduziert sowohl den Speicheraufwand als auch die zu erbringende Rechenleistung, sodass das Sensorfeld insgesamt günstiger hergestellt werden kann und einen geringeren Stromverbrauch aufweist.

In einer bevorzugten Ausführungsform wird als Korrekturwert bezüglich der ersten Richtung ein Differenzwert bestimmt, indem aufgrund der Komponente der groben Berührposition in der ersten Richtung bezüglich des Mittelpunkts M ein x-Anteil festgelegt wird, der aus einer ersten Wertegruppe für eine vorbestimmte Koordinate entlang der zweiten Richtung stammt. Außerdem wird ein y-Anteil des Differenzwerts festgelegt, aufgrund der Komponente der groben Berührposition in der zweiten Richtung bezüglich des Mittelpunkts, der aus einer zweiten Wertegruppe für eine vorbestimmte Koordinate entlang der ersten Richtung stammt. Der Differenzwert errechnet sich als eine Summe des x-Anteils und des y-Anteils.

Ein Korrekturwert bezüglich der zweiten Richtung wird analog festgestellt. Ein Differenzwert in der zweiten Richtung wird berechnet, indem aufgrund der Komponente der groben Berührposition in der zweiten Richtung bezüglich des Mittelpunkts ein y-Anteil festgelegt wird, der aus einer dritten Wertegruppe für eine vorbestimmte Koordinate entlang der ersten Richtung stammt und aufgrund der Komponente der groben Berührposition in der zweiten Richtung bezüglich des Mittelpunkts ein x-Anteil festgelegt wird, der aus einer vierten Wertegruppe für eine vorbestimmte Koordinate entlang der zweiten Richtung stammt. Auch hier wird der Differenzwert als eine Summe des y-Anteils und des x-Anteils berechnet.

Die endgültige Berührposition wird dann aus der Summe der groben Berührposition und der Differenzwerte bezüglich der beiden Richtungen gebildet.

Bei einem Elektrodenraster, das entlang zweier orthogonalen Richtungen, die im Folgenden als x- und y-Richtungen bezeichnet werden, aufgebaut ist, und bei dem als Gruppe von Elektroden eine Gruppe von vier im Rechteck angeordneten Elektroden angenommen wird, ist es beispielsweise möglich, für die vorbestimmten Koordinaten jeweils die Hälfte bzw. ein Viertel des Maximalwerts der jeweiligen Richtung zu verwenden. Der Maximalwert bestimmt sich dabei aus dem Abstand der Elektroden in der jeweiligen Richtung.

Aufgrund der Symmetrien, die die Korrekturwerte aufweisen, ist es dabei möglich, die Wertetabelle für die Korrekturwerte auf Linien entlang exakt dieser vorbestimmten Koordinaten zu beschränken.

Anhand der Symmetrie der Korrekturwerte bezüglich des Mittelpunkts lassen sich die Wertegruppen in der ersten und der zweiten Richtung jeweils auf die Hälfte des Elektrodenabstands reduzieren.

Der Berührdurchmesser kann über einen linearen Zusammenhang aus den gemessenen kapazitiven Werten der Elektroden empirisch bestimmt werden. Auf diesem Weg ist eine einfache und schnelle Abschätzung des Berührdurchmessers möglich, der dem Durchmesser des Bereichs, in dem eine Fingerspitze das Sensorfeld berührt, also auf diesem aufliegt, entspricht.

Vorzugsweise sind die Elektroden voneinander beabstandet.

Der Durchmesser der Elektroden oder der Abstand der Mittelpunkte der Elektroden beträgt bevorzugt zwischen 5 bis 15 mm, wobei der Abstand in der ersten und in der zweiten Richtung unterschiedlich sein kann.

Der kapazitive Wert jeder Elektrode wird vorzugsweise gegen Masse gemessen.

Die Erfindung wird im Folgenden anhand eines Ausführungsbeispiels und mit Bezug auf die beigefügten Zeichnungen näher beschrieben. In den Zeichnungen zeigen:
- Figur 1 eine schematische Darstellung eines Sensorfelds mit einem Raster aus mehreren diskreten Elektroden und einer berührten Fläche;
- Figur 2 eine schematische Darstellung der Richtungen und des Rasters der Wertetabelle der Korrekturwerte;
- Figur 3 eine der Symmetrien der Korrekturwerte;
- Figur 4 eine schematische Übersicht der verwendeten Koordinatenangaben; und
- Figuren 5 und 6 Beispiele für das Messverfahren der Kapazitätswerte der Elektroden.

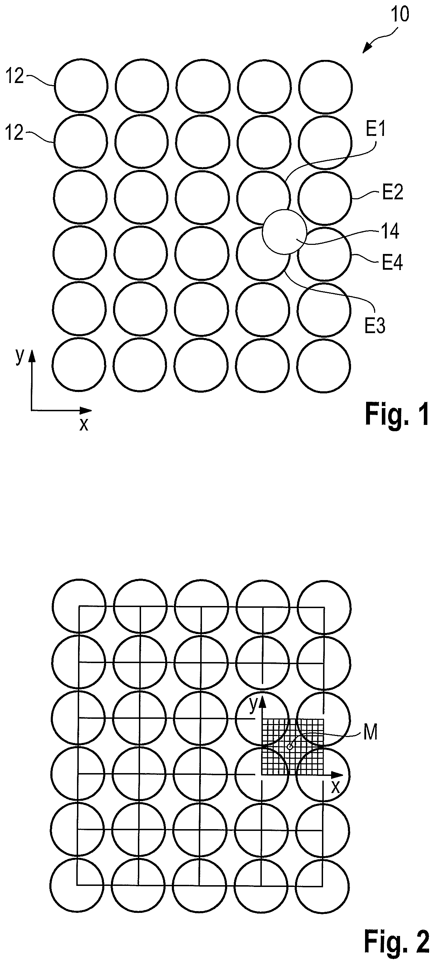

Figur 1 zeigt einen Ausschnitt aus einem kapazitiven Sensorfeld 10 mit einem Raster aus mehreren diskreten Elektroden 12, von denen in den Figuren jeweils nur zwei mit Bezugszeichen versehen sind. Die Elektroden 12 sind hier in einem orthogonalen Raster in x- und y-Richtung mit Abstand zueinander angeordnet. Der Abstand der Elektroden 12 in einer Richtung ist jeweils gleich, wobei hier aber der Abstand der Elektrodenmittelpunkte xₘₐₓ in x-Richtung etwas größer ist als der Abstand der Elektrodenmittelpunkte yₘₐₓ in y-Richtung.

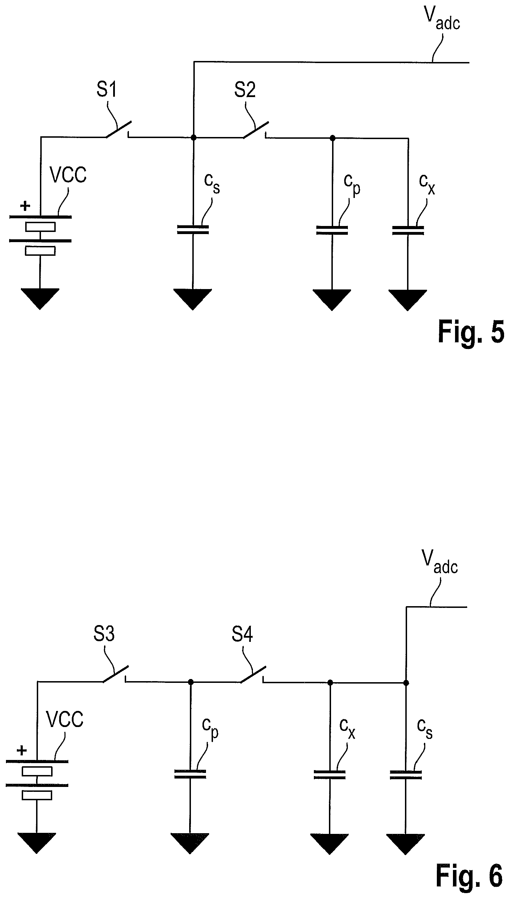

Jede der Elektroden 12 ist über eine Auswerteschaltung, wie sie beispielsweise in den Figuren 5 und 6 dargestellt ist, mit Masse verbindbar, sodass die Kapazität jeder einzelnen Elektrode 12 gegenüber Masse ermittelt werden kann.

Das kapazitive Sensorfeld 10 wird beispielsweise als Bedienfeld für Fahrzeugfunktionen, zur Bedienung eines Radios oder eines Navigationsgeräts eingesetzt und kann in einem Armaturenbrett eines Kraftfahrzeugs angeordnet sein.

Je nach der Stelle, an der ein Benutzer das Sensorfeld 10 mit dem Finger oder eventuell mit einem dafür vorgesehenen Stift berührt, wird eine entsprechende vorbestimmte Funktion ausgeführt. Dabei kann die Funktion durch eine einzelne Berührung oder auch durch eine Folge von Berührungen, beispielsweise durch das Ziehen eines Fingers zur Verstellung der Lautstärke oder Ähnliches bestimmt sein.

In Figur 1 ist eine Berührfläche 14 mit einem Mittelpunkt, der durch die endgültige Berührposition Bₑ gebildet wird, eingezeichnet. Die Berührfläche 14 bestimmt sich hier aus dem Durchmesser, mit dem die Fingerspitze des Benutzers auf der Oberfläche des Sensorfelds 10 anliegt. Im vorliegenden Beispiel werden die Elektroden E1, E3 und E4 zu unterschiedlichen Maßen berührt.

Im hier gezeigten Beispiel beträgt der Elektrodenabstand in x-Richtung 11 mm und in y-Richtung 10 mm. Der Elektrodendurchmesser ist hier mit 9,7 mm gewählt. Dem Fachmann steht natürlich frei, die Durchmesser, Abstände und Anordnung der Elektroden zu variieren. Das im Folgenden beschriebene Verfahren zur Ermittlung der Berührposition Bₑ muss dann entsprechend abgewandelt werden.

In einem Verfahrensdurchlauf wird zunächst der kapazitive Wert jeder Elektrode 12 des Rasters des Sensorfelds 10 gegen Masse bestimmt.

Alle Elektroden 12, deren kapazitiver Wert oberhalb eines vorbestimmten Schwellenwerts liegt, werden als berührt gewertet.

Die berührten Elektroden (in Figur 1 die drei Elektroden E1, E3 und E4) werden mit benachbarten Elektroden (in Figur 1 die Elektrode E2) zu in einem Rechteck angeordneten Vierergruppen zusammengefasst. Im Fall der Figur 1 gibt es nur eine derartige Vierergruppe, weil nur eine Berührung erfolgt. Wenn jedoch eine Berührung mit beispielsweise zwei Fingern auf dem Sensorfeld 10 erfolgt, würden beispielsweise zwei Elektrodengruppen bestimmt, und die folgenden Verfahrensschritte für beide Elektrodengruppen separat durchgeführt.

Zunächst wird eine grobe Berührposition B_{g} bestimmt, die dann mit mittels der groben Berührposition B_{g} zu bestimmenden Korrekturwerten dₓ, d_{y} verrechnet werden, um eine endgültige Berührposition Bₑ zu ermitteln.

Zur Bestimmung der groben Berührposition B_{g} wird eine Wichtung vorgenommen. Hierzu wird der jeweilige gemessene Kapazitätswert mit der Position der Elektrode 12 in x- bzw. y-Richtung multipliziert, die so gewonnenen Werte werden aufsummiert und durch die Summe der Kapazitäten geteilt.

Dann wird die Abweichung der groben Berührposition B_{g} zur endgültigen Berührposition Bₑ, die dem Schwerpunkt der Berührfläche 14 entspricht, berechnet.

Zu diesem Zweck wird ein Wertefeld festgelegt, das für vorbestimmte Koordinatenwerte der Fläche zwischen den vier Elektrodenmittelpunkten der oben gebildeten Gruppe die zugehörigen Korrekturwerte aufweist. Die Korrekturwerte können beispielsweise empirisch oder durch eine Simulation ermittelt werden,

Für das weitere Vorgehen lässt sich ausnutzen, dass die Korrekturwerte, betrachtet über diese Fläche, ausgeprägte Symmetrien zeigen.

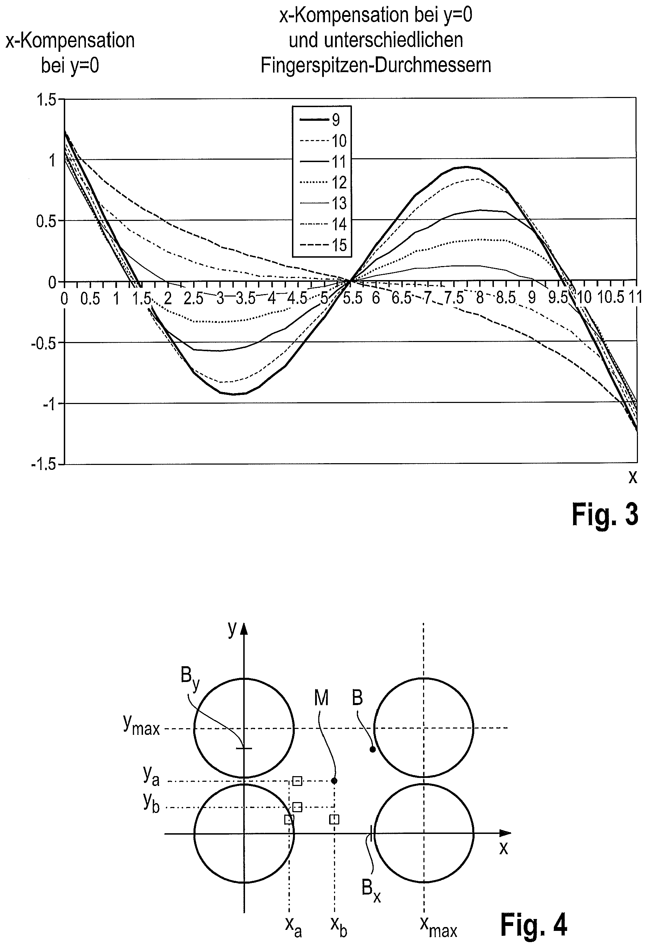

Die Korrekturwerte zeigen Symmetrien bezüglich eines Mittelpunkts M der Vierergruppe von Elektroden. Ein Schnitt durch das Wertefeld in x-Richtung bei y = 0 ist in Figur 3 für unterschiedliche Fingerspitzendurchmesser, also unterschiedliche Durchmesser der Berührfläche 14 dargestellt. Der Ursprung des verwendeten Koordinatensystems liegt in der Mitte einer Elektrode, wie dies in Figur 2 dargestellt ist. Es wird also von jeder der vier Elektroden E1 bis E4 ein anderer Quadrant abgedeckt sowie der Freiraum zwischen den Elektroden.

Im gezeigten Beispiel bestehen z.B. für den x-Korrekturbetrag jeweils Antisymmetrie in x-Richtung und Symmetrie in y-Richtung bezüglich des Mittelpunkts M . Hieraus ergibt sich, dass zur Berechnung das Ablegen der Werte eines einzelnen Quadranten des in Figur 2 gezeigten Wertebereichs bereits ausreichend ist, und alle weitere Information sich durch einfache und schnelle Rechenoperationen gewinnen lassen. Dies reduziert die benötigte Speicherkapazität in der Auswerteelektronik. Der Speicherbedarf wird weiterhin dadurch reduziert, dass innerhalb eines Quadranten sich die Werte nur langsam ändern. Es hat sich gezeigt, dass es ausreichend ist, den Wertebereich auf zwei Linien innerhalb eines Quadranten pro Koordinatenrichtung zu reduzieren. Dies ist in Figur 4 angedeutet.

Im vorliegenden Beispiel sind hierfür Werte entlang der x-Richtung bei yₐ = ½ yₘₐₓ erfasst, und dienen zur Bestimmung eines x-Anteils dₓ₁ eines Differenzwerts dₓ zur Verfeinerung der x-Koordinate der groben Berührposition B_{g}. Außerdem werden Werte erfasst entlang der y-Richtung bei einer x-Koordinate xₐ von ¼ xₘₐₓ, die zur Bestimmung des y-Anteils dₓ₂ des Differenzwerts dₓ zur weiteren Verfeinerung der x-Koordinate der Berührposition dienen.

Zur Ermittlung eines Differenzwerts d_{y} für die y-Koordinate der groben Berührposition B_{g} werden analog Werte entlang der y-Richtung bei einem Wert x_{b} = ½ xₘₐₓ sowie Werte entlang der x-Richtung an der y-Position y_{b} = ¼ yₘₐₓ verwendet, um die Anteile d_{y1} und d_{y2} zu bestimmen.

Es werden also vier Wertegruppen festgelegt. Eine erste Wertegruppe (x, yₐ, k) enthält die Korrekturwerte k für eine Reihe von x-Koordinaten bei der Position y_{a.} Eine zweite Wertegruppe (xₐ, y, k) enthält Korrekturwerte für eine Reihe von y-Koordinaten bei der Position xₐ. Eine dritte Wertegruppe (x_{b}, y, k) enthält die Korrekturwerte k für eine Reihe von y-Koordinaten bei der Position x_{b}. Eine vierte Wertegruppe (x, y_{b}, k) enthält die Korrekturwerte k für eine Reihe von x-Koordinaten bei der Position y_{b}.

Auf diese Weise lässt sich das Feld der Korrekturwerte auf eine einfache Wertetabelle reduzieren. Der Abstand entlang der x- und y-Richtung, in dem die Korrekturwerte erfasst und abgelegt sind, ist dabei natürlich dichter als der Abstand der Elektroden 12 im Elektrodenraster. Es hat sich herausgestellt, dass eine Dichte, die einen Faktor von 100 gegenüber dem Elektrodenraster höher ist, ausreichend ist. Dies entspricht etwa einem Abstand der Korrekturwerte von 0,1 mm entlang des Elektrodenrasters. Bei Ausnutzung der Symmetrien und Reduktion auf zwei Linien pro Koordinate müssen also nur ca. 200 Werte abgelegt, gespeichert und ausgelesen werden.

Das Feld der Korrekturwerte zeigt allerdings eine Abhängigkeit vom Durchmesser der Berührfläche 14, die dem Durchmesser einer Fingerspitze entspricht.

Es hat sich gezeigt, dass sich aus den Kapazitätswerten der berührten Elektroden 12 über einen linearen Zusammenhang eine gute Näherung für den Durchmesser der Berührfläche 14 erhalten lässt. Die jeweiligen Parameter des linearen Zusammenhangs können empirisch durch Simulation oder Messungen für jeweiliges konkretes Sensorfeld ermittelt werden.

Die Korrekturwerte werden für unterschiedliche Durchmesser der Berührfläche 14, also Fingerspitzendurchmesser, erfasst, beispielsweise für Werte zwischen 9 und 15 mm. Für jeden Durchmesser wird ein eigener Satz an Korrekturwerten bestimmt und im Speicher abgelegt.

Die endgültige Berührposition Bₑ wird dann bestimmt, in dem Berührpositionen für die beiden nächstkommenden abgelegten Berührdurchmesser 14 ermittelt werden und aus diesen Werten eine Berührposition für den über den linearen Zusammenhang ermittelten Wert interpoliert wird.

Anhand eines Beispiels, wie es in der Figur 4 gezeigt ist, wird das Verfahren im Folgenden in seinen Grundzügen erläutert.

Zunächst wird wie oben beschrieben die grobe Berührposition B_{g} durch Wichtung der Kapazitätswerte der berührten Elektroden bestimmt.

Anschließend werden Differenzwerte dₓ und d_{y} für die x-Koordinate Bₓ bzw. die y-Koordinate B_{y} der groben Berührposition B_{g} zur Verfeinerung der groben Berührposition B_{g} ermittelt.

Der Anteil dₓ₁ des Korrekturwertes dₓ wird festgelegt, indem für die Koordinate Bₓ aus den Korrekturwerten entlang der Linie yₐ (hier ½ yₘₐₓ) der dem Wert Bₓ entsprechende Korrekturwert k ausgelesen wird. Aufgrund der Symmetriebeziehung in x-Richtung wird der gelesene Wert entweder direkt verwendet oder der negative Wert verwendet, wobei die x-Koordinate entsprechend angepasst wird. Dabei gilt: für Bₓ < ½ xₘₐₓ ist dₓ(Bₓ) = k(yₐ(Bₓ)), für Bₓ > ½ Xmax ist dₓ₁(Bₓ) = -k (yₐ(xₘₐₓ - Bₓ)).

Der zweite Korrekturwert dₓ2 wird aus den Korrekturwerten in y-Richtung entlang der Koordinate xₐ (in diesem Fall bei ¼ xₘₐₓ) ermittelt, wobei wiederum die Symmetrien beachtet werden müssen. Wenn B_{y}, also die y-Komponente der groben Berührposition B_{g}, kleiner ist als ½ yₘₐₓ, wird der abgelegte Korrekturwert direkt verwendet, wenn sie größer ist als ½ yₘₐₓ, wird der Wert an der bezüglich des Mittelpunkts M gespiegelten y-Koordinate verwendet. Dabei gilt: Für B_{y} < ½ ymax ist dx2 = k(xₐ(B_{y})), für B_{y} > ½ ymax ist dₓ₂(B_{y}) = k(yₐ(yₘₐₓ - B_{y})).

Der x-Differenzwert dₓ errechnet sich dann durch eine Multiplikation von dₓ₁ und dₓ₂. Dieser Korrekturwert wird zur x-Komponente Bₓ der groben Berührposition B_{g} dazuaddiert, um die x-Komponente der endgültigen Berührposition Bₑ zu bestimmen.

Die y-Korrekturwerte d_{y} werden analog dazu ermittelt, wobei der Korrekturwert d_{y1} über die Koordinate x_{b} (hier ½ xₘₐₓ) und Korrekturwert d_{y2} über die Koordinate y_{b} (hier ¼ yₘₐₓ) bestimmt wird.

Die Korrekturwerte dₓ und d_{y} werden für die beiden dem ermittelten Berührdurchmesser am nächsten kommenden abgelegten Berührdurchmesser errechnet. Auf diese Weise werden jeweils zwei Sätze von Differenzwerten dₓ und d_{y} gewonnen. Der endgültige Differenzwert wird durch eine Interpolation bestimmt.

Diese endgültigen Differenzwerte dₓ und d_{y} werden zu den x- und y-Komponenten der groben Berührposition B_{g} addiert, um die endgültige Berührposition Bₑ festzulegen.

Auf diese Weise lässt sich der Fehler auf unter 1 mm in jede Richtung reduzieren.

Die Figuren 5 und 6 zeigen mögliche bekannte Verfahren zur Messung der Elektrodenkapazität.

Die gezeigten Schaltungen dienen zur Durchführung eines Charge Transfer Sensing Verfahrens, bei dem jeweils ein Kondensator mit bekannter Kapazität geladen wird. Cs ist dabei die Kapazität des Vergleichskondensators, cₓ die zu messende Kapazität und cₚ bezeichnen unvermeidbare parasitäre Kapazitäten.

In Figur 5 wird cₛ zunächst mit der bekannten Vergleichsspannung VCC geladen, was eine Ladung von Q = VCC * cₛ zur Folge hat. Im nächsten Schritt wird die Spannung VCC abgeklemmt und der zu messende Kondensator mit der Kapazität cₓ sowie unvermeidbar die parasitären Kapazitäten cₚ mit dem Kondensator cₛ verbunden, sodass sich die Ladung entsprechend verteilt: Q = VCC * (cₛ + cₓ + cₚ). Daraus lässt sich die Spannung VC berechnen als VC = VCC * cₛ / (cₛ + cₓ + cₚ).

Alternativ lässt sich auch das in Figur 6 gezeigte Verfahren durchführen, wo über ähnliche Berechnungen VC zu VC = VCC * (cₚ + cₓ)/(cₛ + cₓ + cₚ) bestimmt wird. Diese Verfahren sind näher in der US 2010/0181180 A1 beschrieben.

## Patentansprüche

1. Verfahren zur Bestimmung einer Position einer Berührung auf einem kapazitiven Sensorfeld mit einem Raster aus mehreren diskreten Elektroden (12),
bei dem:
a) berührte Elektroden bestimmt werden, indem für jede der Elektroden ein Kapazitätswert gemessen wird und für jede der Elektroden für den gemessenen Kapazitätswert überprüft wird, ob dieser Wert über einem vorher festgelegten Schwellwert liegt,
b) eine grobe Berührposition (B_{g}) berechnet wird, indem die Elektrodenposition mit dem gemessenen Kapazitätswert gewichtet wird,
c) aus den gemessenen Kapazitätswerten ein Berührdurchmesser (14) errechnet wird und
d) eine endgültige Berührposition (Bₑ) errechnet wird aus der groben Berührposition (B_{g}) und dem errechneten Berührdurchmesser (14) unter Verwendung einer Wertetabelle, in der für mögliche grobe Berührpositionen (B_{g}) und vorgegebene Berührdurchmesser (14) Korrekturwerte (k) abgelegt sind, die empirisch bestimmt wurden.

2. Verfahren nach Anspruch 1, **dadurch gekennzeichnet, dass** die Korrekturwerte (k) für diskrete Relativpositionen mit einer höheren Auflösung als das Elektrodenraster abgelegt sind.

3. Verfahren nach einem der vorhergehenden Ansprüche, wobei die Elektroden (12), für die der gemessene Kapazitätswert über dem Schwellwert liegt, zu wenigstens einer Gruppe (E1-E4) von benachbarten Elektroden, deren Mittelpunkte die Ecken eines Rechtecks bilden, zusammengefasst werden, und für jede Gruppe von Elektroden die grobe Berührposition (B_{g}) durch Division der Summe der Produkte der Elektrodenpositionen der Gruppe mit den gemessenen Kapazitätswerten durch die Summe aller gemessenen Kapazitätswerte der Gruppe bestimmt wird.

4. Verfahren nach Anspruch 3, wobei für die Korrekturwerte Symmetrien in zwei zueinander orthogonalen Richtungen (x, y) bezüglich eines Mittelpunkts (M) der Gruppe von Elektroden (E1-E4) angenommen werden.

5. Verfahren nach Anspruch 4, wobei ein Differenzwert (dₓ) in der ersten Richtung (x) bestimmt wird, indem
aufgrund der Komponente (Bₓ) der groben Berührposition (B_{g}) in der ersten Richtung (x) bezüglich des Mittelpunkts (M) ein x-Anteil (dₓ₁) festgelegt wird, der aus einer ersten Wertegruppe (x, yₐ, k) der Korrekturwerte (k) für eine vorbestimmte Koordinate (yₐ) entlang der zweiten Richtung (y) stammt,
aufgrund der Komponente (B_{y}) der groben Berührposition (B_{g}) in der zweiten Richtung (y) bezüglich des Mittelpunkts (M) ein y-Anteil (dₓ₂) festgelegt wird, der aus einer zweiten Wertegruppe (xₐ, y, k) der Korrekturwerte (k) für eine vorbestimmte Koordinate (xₐ) entlang der ersten Richtung (x) stammt und
der Differenzwert (dₓ) als eine Summe des x-Anteils (dₓ₁) und des y-Anteils (dₓ₂) berechnet wird,
ein Differenzwert in der zweiten Richtung (y) bestimmt wird, indem aufgrund der Komponente (B_{y}) der groben Berührposition (B_{g}) in der zweiten Richtung (y) bezüglich des Mittelpunkts (M) ein y-Anteil (d_{y1}) festgelegt wird, der aus einer dritten Wertegruppe (x_{b}, y, k) für eine vorbestimmte Koordinate (x_{b}) entlang der ersten Richtung (x) stammt und aufgrund der Komponente (Bₓ) der groben Berührposition (B_{g}) in der zweiten Richtung (x) bezüglich des Mittelpunkts (M) ein x-Anteil (d_{y2}) festgelegt wird, der aus einer vierten Wertegruppe (x,y_{b}, k) für eine vorbestimmte Koordinate (y_{b}) entlang der zweiten Richtung (y) stammt,
der Differenzwert (d_{y}) als eine Summe des y-Anteils (d_{y1}) und des x-Anteils (d_{y2}) berechnet wird, und
die endgültige Berührposition (Bₑ) aus der Summe der groben Berührposition (B_{g}) und der Differenzwerte (dₓ, d_{y}) gebildet wird.

6. Verfahren nach Anspruch 5, wobei anhand der Symmetrie der Korrekturwerte (k) bezüglich des Mittelpunkts (M) die Wertegruppen in der ersten und der zweiten Richtung (x, y) jeweils auf die Hälfte des Elektrodenabstands reduziert werden.

7. Verfahren nach einem der vorhergehenden Ansprüche, wobei die Elektroden (12) voneinander beabstandet sind.

8. Verfahren nach einem der vorhergehenden Ansprüche, wobei ein Durchmesser der Elektroden (12) oder ein Abstand der Mittelpunkte (M) der Elektroden (12) ca. 5 - 15 mm beträgt.

9. Verfahren nach einem der vorhergehenden Ansprüche, wobei der kapazitive Wert jeder Elektrode (12) gegen Masse gemessen wird.

## Claims

1. A method of determining a position of a touch on a capacitive sensor field having a grid of a plurality of discrete electrodes (12),
wherein:
(a) touched electrodes are determined by measuring a capacitance value for each of the electrodes and checking, for each of the electrodes, for the measured capacitance value whether this value is above a predefined threshold value;
(b) a rough touch position (B_{g}) is calculated by weighting the electrode position with the measured capacitance value;
(c) a touch diameter (14) is calculated from the measured capacitance values; and
(d) a final touch position (Bₑ) is calculated from the rough touch position (B_{g}) and the calculated touch diameter (14) using a value table in which correction values (k) that were determined empirically are stored for possible rough touch positions (B_{g}) and given touch diameters (14).

2. The method according to claim 1, **characterized in that** the correction values (k) are stored for discrete relative positions with a higher resolution than the electrode grid.

3. The method according to either of the preceding claims, wherein the electrodes (12) for which the measured capacitance value is above the threshold value are combined into at least one group (E1-E4) of neighboring electrodes, the centers of which constitute the corners of a rectangle, and, for each group of electrodes, the rough touch position (B_{g}) is determined by a division of the sum of the products of the electrode positions of the group with the measured capacitance values by the sum of all measured capacitance values of the group.

4. The method according to claim 3, wherein symmetries in two directions (x, y) orthogonal to each other in relation to a center (M) of the group of electrodes (E1-E4) are assumed for the correction values.

5. The method according to claim 4, wherein a difference value (dₓ) in the first direction (x) is determined in that
based on the component (Bₓ) of the rough touch position (B_{g}) in the first direction (x) in relation to the center (M), an x-proportion (dₓ₁) is defined which originates from a first group of values (x, yₐ, k) of the correction values (k) for a predetermined coordinate (yₐ) along the second direction (y);
based on the component (B_{y}) of the rough touch position (B_{g}) in the second direction (y) in relation to the center (M), a y-proportion (dₓ₂) is defined which originates from a second group of values (xₐ, y, k) of the correction values (k) for a predetermined coordinate (xₐ) along the first direction (x); and
the difference value (dₓ) is calculated as a sum of the x-proportion (dₓ₁) and the y-proportion (dx2);
a difference value in the second direction (y) is determined in that
based on the component (B_{y}) of the rough touch position (B_{g}) in the second direction (y) in relation to the center (M), a y-proportion (d_{y1}) is defined which originates from a third group of values (x_{b}, y, k) for a predetermined coordinate (x_{b}) along the first direction (x); and
based on the component (Bₓ) of the rough touch position (B_{g}) in the second direction (x) in relation to the center (M), an x-proportion (d_{y2}) is defined which originates from a fourth group of values (x, y_{b}, k) for a predetermined coordinate (y_{b}) along the second direction (y);
the difference value (d_{y}) is calculated as a sum of the y-proportion (d_{y1}) and the x-proportion (d_{y2}); and
the final touch position (Bₑ) is formed from the sum of the rough touch position (B_{g}) and the difference values (dₓ, d_{y}).

6. The method according to claim 5, wherein on the basis of the symmetry of the correction values (k) in relation to the center (M), the groups of values in the first and second directions (x, y) are each reduced to half the electrode distance.

7. The method according to any of the preceding claims, wherein the electrodes (12) are spaced from each other.

8. The method according to any of the preceding claims, wherein a diameter of the electrodes (12) or a distance of the centers (M) of the electrodes (12) amounts to approx. 5 - 15 mm.

9. The method according to any of the preceding claims, wherein the capacitive value of each electrode (12) is measured against ground.

## Revendications

1. Procédé de détermination d'une position d'un contact sur un champ de capteurs capacitif présentant une grille composée de plusieurs électrodes discrètes (12),
dans lequel :
a) des électrodes touchées sont déterminées en mesurant une valeur de capacité pour chacune des électrodes et en vérifiant, pour chacune des électrodes, pour la valeur de capacité mesurée si cette valeur est supérieure à une valeur seuil fixée auparavant,
b) une position de contact approximative (B_{g}) est calculée en pondérant la position d'électrode avec la valeur de capacité mesurée,
c) un diamètre de contact (14) est calculé à partir des valeurs de capacité mesurées, et
d) une position de contact définitive (Bₑ) est calculée à partir de la position de contact approximative (B_{g}) et du diamètre de contact (14) calculé en utilisant un tableau de valeurs dans lequel des valeurs de correction (k) pour des positions de contact approximatives (B_{g}) possibles et des diamètres de contact (14) prédéfinis sont stockées, lesquelles ont été déterminées de manière empirique.

2. Procédé selon la revendication 1, **caractérisé en ce que** les valeurs de correction (k) pour des positions relatives discrètes sont stockées avec une résolution plus élevée que la grille d'électrodes.

3. Procédé selon l'une des revendications précédentes, les électrodes (12) pour lesquelles la valeur de capacité mesurée est supérieure à la valeur seuil étant regroupées dans au moins un groupe (E1-E4) d'électrodes adjacentes dont les centres forment les coins d'un rectangle, et la position de contact approximative (B_{g}) étant déterminée pour chaque groupe d'électrodes en divisant la somme des produits des positions d'électrode du groupe avec les valeurs de capacité mesurées par la somme de toutes les valeurs de capacité mesurées du groupe.

4. Procédé selon la revendication 3, des symétries étant supposées pour les valeurs de correction dans deux sens (x, y) orthogonaux l'un par rapport à l'autre par rapport à un centre (M) du groupe d'électrodes (E1-E4).

5. Procédé selon la revendication 4, une valeur différentielle (dₓ) dans le premier sens (x) étant déterminée
en fixant, sur la base de la composante (Bₓ) de la position de contact approximative (B_{g}) dans le premier sens (x) par rapport au centre (M), une part x (dₓ₁) provenant d'un premier groupe de valeurs (x, yₐ, k) des valeurs de correction (k) pour une coordonnée prédéterminée (yₐ) le long du deuxième sens (y),
en fixant, sur la base de la composante (B_{y}) de la position de contact approximative (B_{g}) dans le deuxième sens (y) par rapport au centre (M), une part y (dₓ₂) provenant d'un deuxième groupe de valeurs (xₐ, y, k) des valeurs de correction (k) pour une coordonnée prédéterminée (xₐ) le long du premier sens (x), et
en calculant la valeur différentielle (dₓ) en tant que somme de la part x (dₓ₁) et de la part y (dₓ₂),
en déterminant une valeur différentielle dans le deuxième sens (y),
en fixant, sur la base de la composante (B_{y}) de la position de contact approximative (B_{g}) dans le deuxième sens (y) par rapport au centre (M), une part y (d_{y1}) provenant d'un troisième groupe de valeurs (x_{b}, y, k) pour une coordonnée prédéterminée (x_{b}) le long du premier sens (x), et
en fixant, sur la base de la composante (Bₓ) de la position de contact approximative (B_{g}) dans le deuxième sens (x) par rapport au centre (M), une part x (d_{y2}) provenant d'un quatrième groupe de valeurs (x, y_{b}, k) pour une coordonnée prédéterminée (y_{b}) le long du deuxième sens (y),
en calculant la valeur différentielle (d_{y}) en tant que somme de la part y (d_{y1}) et de la part x (d_{y2}), et
en établissant la position de contact définitive (Bₑ) à partir de la somme de la position de contact approximative (B_{g}) et des valeurs différentielles (dₓ, d_{y}).

6. Procédé selon la revendication 5, les groupes de valeurs dans le premier et dans le deuxième sens (x, y) étant chacun réduits à la moitié de la distance d'électrode sur la base de la symétrie des valeurs de correction (k) par rapport au centre (M).

7. Procédé selon l'une des revendications précédentes, les électrodes (12) étant espacées les unes des autres.

8. Procédé selon l'une des revendications précédentes, un diamètre des électrodes (12) ou une distance des centres (M) des électrodes (12) étant d'environ 5 - 15 mm.

9. Procédé selon l'une des revendications précédentes, la valeur capacitive de chaque électrode (12) état mesurée par rapport à la terre.
